# EUROPEAN PATENT SPECIFICATION

(11) **EP 3 264 911 B1**
(45) Date of publication and mention of the grant of the patent: **24.04.2019**
(21) Application number: 16708135.5
(22) Date of filing: 03.03.2016
(51) Int. Cl.: A23L 2/52

(54) **SHELF-STABLE READY TO DRINK BEVERAGES CONTAINING HYDROLYZED WHOLE GRAIN AND A STABILIZING SYSTEM**
LAGERSTABILE TRINKFERTIGE GETRÄNKE MIT HYDROLYSIERTEM VOLLKORN UND STABILISIERUNGSSYSTEM
BOISSONS PRÊTES À BOIRE DE LONGUE CONSERVATION CONTENANT DES GRAINS ENTIERS HYDROLYSÉS, ET SYSTÈME DE STABILISATION

(30) Priority: 06.03.2015 US 201562129347 P
(43) Date of publication of application: 10.01.2018
(73) Proprietor: Nestec S.A., 1800 Vevey (CH)
(72) Inventor: PALAG, Soledad, Hillard, Ohio 43026 (US); PASCUAL, Teresita Bautista, Marysville, Ohio 43040 (US); SHER, Alexander, Dublin, Ohio 43017 (US); KAPCHIE, Virginie, Dublin, Ohio 43016 (US); FU, Jun-Tse, Dublin, Ohio 43016 (US); BOEHM, Robert Thomas, Marysville, OH 43040 (US)
(74) Representative: Krishnan, Sri
(86) International application number: PCT/EP2016/054594
(87) International publication number: WO 2016/142278

(56) References cited:
- WO-A1-2011/103454
- WO-A1-2012/076565
- WO-A1-2013/072203
- WO-A1-2013/164485
- WO-A1-2014/086690
- WO-A1-2014/131792
- US-A1- 2010 178 400

## Description

### BACKGROUND

The present disclosure generally relates to nutritional products. More specifically, the present disclosure relates to shelf-stable ready to drink ("RTD") beverages containing a hydrolyzed whole grain composition and a stabilizing system and also relates to methods for making same.

Extensive evidence is emerging, mainly from epidemiological studies, that a daily intake of three servings of whole grain products, i.e. 48 g of whole grain, is positively associated with decreased risk of cardiovascular diseases, increased insulin sensitivity, type 2 diabetes onset, obesity (mainly visceral obesity), and digestive system cancers. These health benefits of the whole grains are reported to be due to the synergistic role of the dietary fibers and other components, such as vitamins, minerals and bioactive phytochemicals.

The regulatory authorities in Sweden, the United States and the United Kingdom have already approved specific heart health claims based on the available scientific substantiation. Food products comprising dietary fibers are also growing in popularity with consumers, not just because whole grain consumption is now included in some national dietary recommendations but also because whole grain products are considered wholesome and natural. Recommendations for whole grain consumption have been established by government authorities and expert groups to encourage consumers to eat whole grains. For example, in the U.S.A, the recommendations are to consume 45-80 g of whole grain per day. However, data provided by national dietary surveys in the United Kingdom, the U.S.A. and China show that whole grain consumption varies between 0 and 30 g whole grains per day.

The lack of commercial whole grain products and the poor organoleptic properties of the available whole grain products are generally identified as barriers for whole grain consumption. For example, the amount of whole grain added to a food product such as a beverage is restricted because increased amounts of whole grain change the physical and organoleptic properties of the beverage dramatically. Specifically, increasing the whole grain content of a food product usually impacts organoleptic parameters such as the taste, texture and the overall appearance of the instant drink powders, as well as its processability.

The consumer is not willing to compromise on organoleptic properties of a ready to drink beverage in order to increase daily whole grain intake. Taste, texture and overall appearance are such organoleptic properties.

Moreover, an attempt to improve texture perception of a ready to drink whole grain beverage cannot compromise the long shelf-life stability of the beverage. Such stability is challenging because beverages can experience gelation over time, especially those containing dairy and/or flavors. Stabilizer ingredients added to the beverage to prevent sedimentation of particles in the beverage, such as cocoa, increase susceptibility to gelation by interacting with each other and with milk proteins. Substantially reducing or removing milk fat, cocoa and/or sugar in flavored milk beverages can also contribute to gelation, resulting in a shorter shelf-life.

WO 2012/076565 A1 discloses a ready-to-drink beverage comprising a flavor component; a hydrolyzed whole grain composition; an alpha-amylase or fragments thereof, which alpha-amylase or fragments thereof show no hydrolytic activity towards dietary fibers when in the active state; a sucrose content below 15% by weight of the beverage; and wherein the beverage has a viscosity in the range 1-300 mPa.s.

### SUMMARY

The present disclosure provides shelf-stable RTD beverages containing a hydrolyzed whole grain composition and also provides methods for making such beverages. The shelf-stable RTD beverages containing a hydrolyzed whole grain composition can be aseptic, can have a pleasant mouthfeel, and can have good physico-chemical stability during storage. The shelf-stable RTD beverages can have a low-fat content. The beverages can also overcome problems with age gelation and other phase separation/instability issues during different storage conditions over the full life of the beverages.

In a general embodiment, a ready to drink beverage is provided. The beverage comprises a dairy component; a cocoa component in an amount of from 0.25 to 2.5 wt% of the beverage; sucrose in an amount of from 2 to 7 wt% of the beverage; a hydrolyzed whole grain composition in an amount of from 2 to 7 wt% of the beverage; and a stabilizing system comprising high acyl gellan in an amount of from 0.01 to 0.30 wt% of the beverage; wherein the average particle size D[4,3] of the beverage is comprised between 30 and 45 microns with a span comprised between 8 and 15 microns.

In an embodiment, the stabilizing system further comprises iota carrageenan in an amount of 0.001 to 0.1 wt% of the beverage.

In an embodiment, the cocoa component is alkalised cocoa.

In an embodiment, the ready to drink beverage comprises a malt component.

In an embodiment, the ready to drink beverage comprises sodium hexametaphosphate in an amount from 0.005 to 0.2 wt% of the beverage.

In an embodiment, the hydrolyzed whole grain composition comprises at least one of wheat, oat, rice, barley, or a blend thereof.

In an embodiment, the ready to drink beverage contains from 0.80 to 1.2 g of dietary fibers per 100mL of the beverage.

In another embodiment, a method of producing a ready to drink beverage is provided. The method comprises the steps of a) mixing into a liquid: a cocoa component in an amount of from 0.25 to 2.5 wt% of the beverage; sucrose in an amount of from 2 to 7 wt% of the beverage; a hydrolyzed whole grain composition in an amount from 2 to 7 wt% of the beverage; a stabilizing system comprising high acyl gellan in an amount from 0.01 to 0.30 wt% of the beverage; wherein said liquid is milk or water; wherein a dairy component is mixed into said liquid when said liquid is water; b) sterilizing the mix obtained in step a) for 3 to 15 seconds at a temperature of 140°C to 145°C, thereby obtaining a sterilized mix; c) performing a two-step homogenization of the sterilized mix at a first pressure of 135 to 250 bars, then at a second pressure of 35 bars to 50 bars, thereby obtaining a homogenized mix; d) cooling said homogenized mix to a temperature of 4°C to 30°C; and e) aseptically filling said homogenized mix into a container.

In an embodiment, the stabilizing system further comprises iota carrageenan in an amount of from 0.001 to 0.1 wt% of the beverage.

In an embodiment, the cocoa component is hydrated and heated for 30 to 60 minutes at a temperature of 80°C to 95°C, prior to mixing said cocoa component into said liquid.

In an embodiment, the container is a PET bottle.

In an embodiment, the liquid is water, and the stabilizing system is mixed into water first before other ingredients.

In an embodiment, the hydrolyzed whole grain composition is added to the other components as a powder or as a liquid concentrate.

In an embodiment, the method comprises forming the hydrolyzed whole grain composition by subjecting a whole grain component to an alpha-amylase and a protease.

In an embodiment, the method comprises adding a malt component to the beverage.

In an embodiment, the malt component comprises malted barley.

An advantage of the present disclosure is to provide an improved ready to drink shelf-stable beverage.

Another advantage of the present disclosure is to provide a ready to drink beverage that does not have stability issues such as age gelation during storage.

Still another advantage of the present disclosure is to provide a ready to drink flavored dairy beverage that maintains a pleasant mouthfeel, body, smooth texture, and good flavor without off-notes during the shelf-life.

Another advantage of the present disclosure is to increase the whole grain and fiber content of a beverage without substantial detriment to the organoleptic parameters of the beverage.

Still another advantage of the present disclosure is to provide a greater sense of satiety and slower digestion without substantial detriment to the organoleptic parameters of the beverage.

Yet another advantage of the present disclosure is to provide a whole grain beverage with a desired viscosity, a smooth texture, and added nutritional health and wellness values.

Another advantage of the present disclosure is to improve the carbohydrate profile of a ready to drink beverage by replacing traditional externally supplied sweeteners such as glucose syrup, high fructose corn syrup, invert syrup, maltodextrin, sucrose, fiber concentrate, inulin and the like with a more wholesome sweetener source.

Still another advantage of the present disclosure is to provide an improved ready to drink shelf-stable beverage that has a malt component.

Yet another advantage of the present disclosure is to provide a stabilizer system that maintains a cocoa component in suspension in a dairy medium and/or water.

Another advantage of the present disclosure is to provide a stabilizer system that maintains a ready to drink beverage in a homogeneous state during storage.

Additional features and advantages are described herein, and will be apparent from, the following Detailed Description.

### DETAILED DESCRIPTION

All percentages expressed herein are by weight of the total weight of the composition unless expressed otherwise. When reference is made to the pH, values correspond to pH measured at 25 °C with standard equipment. As used herein, "about" is understood to refer to numbers in a range of numerals, for example the range of -10% to +10% and preferably -5% to +5% of the referenced number. Moreover, all numerical ranges herein should be understood to include all integers, whole or fractions, within the range.

As used herein and in the appended claims, the singular form of a word includes the plural, and vice versa, unless the context clearly dictates otherwise. Thus, the references "a," "an" and "the" are generally inclusive of the plurals of the respective terms. For example, reference to "a beverage" or "a method" includes a plurality of such "beverages" or "methods."

Similarly, the words "comprise," "comprises," and "comprising" are to be interpreted inclusively rather than exclusively. Likewise, the terms "include," "including" and "or" should all be construed to be inclusive, unless such a construction is clearly prohibited from the context. However, the embodiments provided by the present disclosure may lack any element that is not specifically disclosed herein. Thus, a disclosure of an embodiment defined using the term "comprising" is also a disclosure of embodiments "consisting essentially of' and "consisting of' the disclosed components. Where used herein, the term "example," particularly when followed by a listing of terms, is merely exemplary and illustrative, and should not be deemed to be exclusive or comprehensive. Any embodiment disclosed herein can be combined with any other embodiment disclosed herein.

The present disclosure relates to shelf-stable ready to drink (RTD) beverages containing a hydrolyzed whole grain composition and a stabilizer system (hereinafter "the beverage" or "the beverages"). A "ready to drink" beverage is a beverage in liquid form that can be consumed without further addition of liquid. Preferably the beverage is aseptic. The beverage can have protein in an amount of 3 to 6 wt% of the beverage, for example 3 to 5 wt%, and can have fat in an amount of 0.2 to 2.5 wt% of the beverage, for example 0.5 to 2.5 wt%.

A "hydrolyzed whole grain composition" is a whole grain component enzymatically digested by using at least an alpha-amylase. The hydrolyzed whole grain composition is preferably further digested by the use of a protease. Whole grain components are components made from unrefined cereal grains. Whole grain components comprise the entire edible parts of a grain; i.e. the germ, the endosperm and the bran. Whole grain components may be provided in a variety of forms such as ground, flaked, cracked or other forms, as is commonly known in the milling industry. Optionally the whole grain components are concentrated and dried after hydrolysis.

The hydrolyzed whole grain composition is preferably a blend of hydrolyzed whole grains, such as a hydrolyzed blend of whole grain rice, wheat, oat, and barley. For example, the hydrolyzed whole grain can be a hydrolyzed blend of rice, wheat, oat and barley in a weight ratio of about 50:35:7.5:7.5. The hydrolysis may be performed in the presence of an anti-oxidant, such as Vitamin E, which may provide extended shelf life of the hydrolyzed whole grain composition. In an embodiment, a blend of hydrolysed whole grain wheat, oat and barley is prepared, and mixed with hydrolysed whole rice, in a weight ratio ranging from 30 (wheat, oat, barley):70 (rice) to 70 (wheat, oat, barley):30 (rice). In an embodiment, the hydrolysed whole grain composition consists of hydrolysed whole rice. In an embodiment, the hydrolysed whole grain composition consists of a hydrolyzed blend of whole grain wheat, oat, and barley, or of a blend of hydrolysed whole grain wheat, oat, and barley. In an embodiment, the hydrolyzed whole grain can be a hydrolyzed blend of wheat, oat and barley in a weight ratio of about (50-80):(10-25):(10-25).

In an embodiment, the whole grain, such as a blend of whole grain wheat, oat and barley, is about 30 wt% of the hydrolysis mixture; the alpha-amylase is about 0.1 wt% of the hydrolysis mixture; the alpha-amylase is about 0.05 wt% of the hydrolysis mixture; di-potassium phosphate is about 1.0 wt% of the hydrolysis mixture; the Vitamin E is about 0.02 wt% of the hydrolysis mixture; and water is about 70 wt% of the hydrolysis mixture.

The alpha-amylase and the protease can be any such enzymes known to one having ordinary skill in the art, for example VALIDASE® HT 425L from Valley Research, Inc. and ALCALASE® 2.4L from Novozymes, respectively. Preferably the alpha-amylase and/or the protease are devoid of hydrolytic activity toward dietary fibers when in the active state. The term "devoid of hydrolytic activity toward dietary fibers" may encompass up to 5% degradation of the dietary fibers, preferably up to 3% degradation, more preferably up to 2% degradation and most preferably up to 1% degradation. Such degradation may be unavoidable if high concentrations or extensive incubation times are used.

A "hydrolyzed whole grain composition" also encompasses enzymatic treatment of flour and subsequent reconstitution of the whole grain by blending the flour, the bran and the germ. Such reconstitution may be performed before use of the hydrolyzed whole grain composition in the final product, namely the ready-to-drink beverage, or during mixing that forms the final product. Thus, an embodiment of the hydrolyzed whole grain composition is made by reconstitution of whole grains after treatment of one or more of the individual parts of the whole grain.

The stabilizer system comprises high acyl gellan. Optionally, the stabilizer system comprises iota-carrageenan. In an embodiment, the beverage comprises the high acyl gellan in an amount of 0.01 to 0.30 wt% of the beverage, preferably about 0.10 wt% of the beverage, and optionally, the iota carrageenan in an amount of 0.001 to 0.1 wt% of the beverage, preferably 0.006 to 0.01 wt% of the beverage. In high acyl gellan, two acyl substituents, namely acetate and glycerate, are present. Both of these substituents are located on the same glucose residue and, on average, there is one glycerate per repeat unit and one acetate per every two repeat units. In contrast, the acyl groups have been removed in low acyl gellan to produce a linear repeat unit substantially lacking such groups.

The combination of the disclosed amounts of high acyl gellan and optionally, iota carrageenan, was found to assist in maintaining good suspension and emulsion stability of the beverage, avoiding gelation and other phase separation issues during the storage, and improving mouthfeel. For example, the stabilizing system can maintain the flavor component in suspension in an aqueous/dairy medium and stabilize proteins while also preventing or minimizing other phase separation issues.

In an embodiment, the iota carrageenan is the only carrageenan in the beverage. In such an embodiment, the high acyl gellan and the iota-carrageenan can be the only hydrocolloids in the beverage.

The beverage contains a dairy component that can include one or more dairy ingredients or dairy substitute ingredients. For example, the dairy ingredients can be milk, milk fat, milk powder, skim milk, milk proteins and combinations thereof. Examples of suitable dairy proteins are casein, caseinate, casein hydrolysate, whey, whey hydrolysate, whey concentrate, whey isolate, milk protein concentrate, milk protein isolate, and combinations thereof. Furthermore, the dairy protein may be, for example, sweet whey, acid whey, α-lactalbumin, β-lactoglobulin, bovine serum albumin, acid casein, caseinates, α-casein, β-casein and/or γ-casein. Suitable dairy substitute ingredients include soy proteins, rice proteins and combinations thereof, for example. In an embodiment, the beverage comprises at least one of skim milk, whole pasteurized milk, cream or non-fat milk powder. In a preferred embodiment, the beverage does not have added oil.

In an embodiment, the beverage can have a solids content of 12 to 23 wt%, such as 12 to 20 wt% or 14 to 23 wt%. The dairy component can be present in an amount from 0 to 80 wt% of the beverage, preferably 0 to 70 wt% of the beverage. For example, the diary component can be a combination of 0 to 75 wt% liquid skim milk, 0 to 5 wt% skim milk powder, and 0 to 5 wt% cream. In an embodiment, the beverage can contain milk solids in an amount of 2 to 14 wt% of the beverage, preferably 2 to 10 wt% of the beverage.

The beverage can contain a malt component that can be a malt extract and/or a malt concentrate. The malt component, if any, can be present in an amount of 1 to 6 wt% of the beverage, preferably 2 to 6 wt% of the beverage. In a preferred embodiment, the malt component comprises malted barley extract, although other cereal grains may be used additionally or alternatively, such as wheat, corn, oats or rye. The malt component can be formed by at least partially germinating the cereal grain, such as by increasing the water content of the cereal grain, and then drying the grain. For example, the cereal grain may be at least partially germinated by immersing the cereal grain in water. However, the present disclosure is not limited to a specific method by which the malt component is formed, and any method that converts insoluble starch to soluble starch can be used.

The beverage comprises a cocoa component. The cocoa component can include one or more natural cocoas, alkalized cocoas, or other cocoa or chocolate based products. Preferably, the cocoa component comprises alkalized cocoas. In an embodiment, the beverage comprises the cocoa component in an amount of 0.5 to 2.5 wt% of the beverage, preferably 1.0 to 1.3 wt% of the beverage.

The beverage can be made aseptic to avoid or minimize spoiling. Aseptic treatment of the beverage may be performed by pre-heating the beverage, for example to about 75 to 85 °C, and then injecting steam into the beverage to raise the temperature to about 140 to 160 °C, for example at about 150 °C. The beverage may then be cooled, for example by flash cooling, to a temperature of about 75 to 85 °C, homogenized again, further cooled to about room temperature and filled into containers, such as cans. Suitable apparatuses for aseptic treatment of the beverage are commercially available. The stabilizing system can maintain the aseptic RTD dairy beverage in a homogenous state during storage.

The beverages can also include one or more additional ingredients such as flavorants, artificial sweeteners, natural sweeteners, colorants or a combination thereof. Sweeteners can be sugar-based, such as sucrose, invert syrup, fructose syrup, glucose syrup with various DE, maltodextrins with various DE and combinations thereof, for example. Sugarless sweeteners can include, but are not limited to, sugar alcohols such maltitol, xylitol, sorbitol, erythritol, mannitol, isomalt and lactitol, hydrogenated starch hydrolysates, saccharin, cyclamate, acetosulfame, an L-aspartyl-based sweetener, or mixtures thereof.

Usage level of the flavorants, sweeteners and colorants will vary greatly and will depend on such factors as potency of the sweetener, desired sweetness of the beverage, the level and type of flavor used, and cost considerations. Any suitable combinations of sugar and/or sugarless sweeteners may be used in the beverages. In an embodiment, sugar is present in an amount from 0% to 10% of the beverage, preferably from 1.2% to 2.9% of the beverage and more preferably from 1.4% to 2.9% of the beverage, and maltodextrin is present in an amount from 0% to 5.0% of the beverage, preferably from 0% to 1.1% of the beverage. In an embodiment, the beverage does not have artificial sweetener.

Non-limiting examples of suitable flavorants include chocolate enhancers, cream/dairy enhancers, vanilla flavors and combinations thereof.

The final composition can be adjusted to required acidity (pH) by one or more acidulants including but not limited to lactic acid, malic acid, citric acid, tartaric acid, phosphoric acid, glucono delta lactone and combinations thereof. For example, sodium citrate can be used to adjust the pH. In an embodiment, the one or more acidulants are present in the beverage at a total amount from 0% to 0.01% of the beverage. In another embodiment, the one or more acidulants are present in the beverage at a total amount from about 0.005-0.4% of the beverage.

The beverage can further include one or more vitamins and/or minerals. In an embodiment, the vitamins are present in the beverage in an amount of about 0.065% of the beverage. The vitamins include, but are not limited to, vitamin C and group B vitamins, and other non-limiting examples of suitable vitamins include ascorbic acid, ascorbyl palmitate, vitamins B1, B2, B6, B12, and Niacin (B3), or combination of thereof. The vitamins may also include Vitamins A, D, E and K and acid vitamins such as pantothenic acid, folic acid and biotin. The Vitamin A may be present as Vitamin A Palmitate. Vitamin D3 is an example of a suitable Vitamin D.

Non-limiting examples of suitable minerals include calcium, magnesium, iron or a combination thereof. The source of calcium can include calcium carbonate, calcium phosphate, calcium citrate, other insoluble calcium compounds or a combination thereof. The source of magnesium can include magnesium phosphate, magnesium carbonate, magnesium hydroxide or combination of thereof. The source of iron can include iron ammonium phosphate, ferric pyrophosphate, ferric phosphate, ferrous phosphate, other insoluble iron compounds, amino acids, iron chelating compounds such as EDTA, or combinations thereof. The minerals may also include zinc, iodine, copper, phosphorus, manganese, potassium, chromium, molybdenum, selenium, nickel, tin, silicon, vanadium and boron.

In another embodiment, the beverage further includes one or more prebiotics. Non-limiting examples of prebiotics include fructooligosaccharides, inulin, lactulose, galactooligosaccharides, soyoligosaccharides, xylooligosaccharides, isomaltooligosaccharides, gentiooligosaccharides, lactosucrose, glucooligosaccharides, pecticoligosaccharides, resistant starches, sugar alcohols or a combination thereof.

The ready to drink beverages can be made using any suitable process. For example, an embodiment of the process of making the beverages includes mixing into a liquid: a cocoa component, preferably in an amount of 0.25 to 2.5 wt% of the beverage; sucrose, preferably in an amount of 2 to 7 wt% of the beverage; a hydrolyzed whole grain composition, preferably in an amount of 2 to 7 wt% of the beverage; and a stabilizing system comprising high acyl gellan, the amount of the high acyl gellan preferably 0.01 to 0.30 wt% of the beverage. In an embodiment, the stabilizing system comprises iota-carrageenan in an amount of 0.001 to 0.1 wt% of the beverage.

The liquid can be milk or water. When the liquid is water, preferably a dairy component is mixed into the liquid. In an embodiment, the liquid is water, and the stabilizing system is mixed into the water first before the other ingredients. Then the remaining ingredients can be added to the mixture under agitation.

The cocoa component can be hydrated and heated for 30 to 60 minutes at a temperature of 80 °C to 95 °C, prior to mixing the cocoa component into the liquid. The hydrolyzed whole grain composition can be formed by subjecting a whole grain component to an alpha-amylase and a protease. The hydrolyzed whole grain composition can be added to the other components as a powder, such as a spray-dried powder, or as a liquid concentrate.

The resultant mixture can be sterilized, for example by an ultra high temperature ("UHT") treatment at a temperature of 140 °C to 145 °C for 3 seconds to 15 seconds, to obtain a sterilized mix. The sterilized mix can be homogenized, preferably in a two-step homogenization. For example, the sterilized mix can be subjected to a first pressure of 135 bars to 250 bars and then a second pressure of 35 to 50 bars. The homogenization can be followed by cooling the homogenized mix, preferably to a temperature of 4 C° to 30 C°, and aseptic filling of the ready to drink beverage into a suitable container, such as a PET bottle.

In an embodiment, a malt component is added to the beverage. The malt component can comprise malted barley. The malt component can be added to the other components at any stage of the processing.

### EXAMPLES

By way of example and not limitation, the following examples are illustrative of various embodiments provided by the present disclosure.

### Example 1

Table 1 identifies non-limiting exemplary ranges of ingredients for an embodiment of the shelf-stable ready to drink beverage that contains a cocoa component, a dairy component and a malt component.

**Table 1.**

| Ingredient Name | Range (% w/w) |
|---|---|
| Skim Milk | 0 - 75 |
| Skim Milk Powder | 0 - 5 |
| Cream (34 to 38% fat) | 0 - 5 |
| Cocoa Powder (preferably alkalised) | 0.25 - 2.5 |
| Sucrose | 2 - 7 |
| Hydrolyzed Whole Grain (wheat/oat/barley/rice) | 2 - 7 |
| High Acyl Gellan | 0.01 - 0.3 |
| Iota Carrageenan | 0 - 0.1 |
| Malt component | 2 - 6 |
| Maltodextrin | 0 - 5 |
| Sodium Hexametaphosphate | 0.005 - 0.2 |
| Sodium Citrate | 0.005 - 0.4 |
| Reverse Osmosis Water | remainder |
| TOTAL | 100.000 |

### Example 2

Table 2 identifies a non-limiting formulation for an embodiment of the shelf-stable ready to drink beverage that contains a cocoa component, a dairy component and a malt component.

**Table 2.**

| Ingredient Name | Amount (% w/w) |
|---|---|
| Skim Milk | 68.000 |
| Hydrolyzed Whole Grain (wheat/oat/barley/rice) | 3.8 |
| Skim Milk Powder | 2.1 |
| Sucrose | 1.2 |
| Cocoa Powder | 1.2 |
| Maltodextrin | 0.7 |
| High Acyl Gellan | 0.1 |
| Iota Carrageenan | 0.01 |
| Malt component | 4.3 |
| Cream (38% fat) | 2.6 |
| Sodium Hexametaphosphate | 0.02 |
| Sodium Citrate | 0.01 |
| Reverse Osmosis Water | remainder |
| TOTAL | 100.000 |

### Example 3

Table 3 identifies non-limiting exemplary ranges of ingredients for an embodiment of the shelf-stable ready to drink beverage that contains a cocoa component, a dairy component and a malt component.

**Table 3.**

| Ingredient Name | Range (% w/w) |
|---|---|
| Milk | 0 - 70 |
| Malt Component | 1.0 - 4.3 |
| Skimmed milk powder | 0 - 6 |
| Hydrolyzed Whole Grain (wheat/oat/barley/rice) | 1.0 - 6.4 |
| Sucrose | 1.4 - 2.9 |
| Maltodextrin | 0 - 1.1 |
| Cocoa | 1 - 1.3 |
| Tricalcium Phosphate | 0.0014 - 0.29 |
| High Acyl Gellan | ∼0.1 |
| Sodium Hexametaphosphate powder | 0 - 0.020 |
| Sodium Citrate | 0 - 0.01 |
| Iota carrageenan | 0.01 - 0.006 |
| Reverse Osmosis Water | Remainder |
| TOTAL | 100.000 |

### Example 4

Table 4 identifies non-limiting formulations of 1) an embodiment of the shelf-stable ready to drink beverage that contains a cocoa component, a dairy component and a malt component, 2) an embodiment of the shelf-stable ready to drink beverage that contains a cocoa component and a dairy component and does not contain a malt component.

**Table 4.**

| | 1 | 2 |
|---|---|---|
| Ingredient Name | Amount | Amount |
| Unit | % w/w | % w/w |
| Skim Milk (fat 0%, snf 8.6%) | 40.000 | 40.000 |
| Whole Pasteurized Milk (fat 3.3%) | 28.996 | 28.996 |
| Reverse Osmosis Water | 16.473 | 18.954 |
| Malt Component | 4.300 | - |
| Skim Milk Powder | 3.000 | 4.300 |
| Hydrolyzed Whole Grain (wheat/oat/barley) | 1.600 | 1.600 |
| Hydrolyzed Whole Grain (rice) | 1.600 | 1.600 |
| Sucrose | 1.400 | 2.100 |
| Maltodextrin (e.g. FIBERSOL®-2) | 1.050 | 1.100 |
| Alkalized Cocoa Powder (10-12% fat) | 1.200 | 0.500 |
| Tricalcium Phosphate | 0.180 | 0.180 |
| High Acyl Gellan | 0.100 | 0.100 |
| Vitamin Premix | 0.065 | 0.060 |
| Sodium Hexametaphosphate Powder | 0.020 | 0.005 |
| Sodium Citrate | 0.010 | - |
| Iota Carrageenan | 0.006 | 0.005 |
| TOTAL | 100.000 | 100.000 |

### Example 5

Table 5 identifies a non-limiting formulation for an embodiment of the shelf-stable ready to drink beverage that contains a cocoa component, a dairy component and a malt component, and that does not contain iota carrageenan.

**Table 5.**

| Ingredient Name | Amount (% w/w) |
|---|---|
| Water | Remainder to 100 wt% |
| Malt Component | 4.000 |
| Skim Milk Powder | 5.200 |
| Sucrose | 2.350 |
| Hydrolyzed Whole Grain (wheat/oat/barley) | 2.3 |
| Hydrolyzed Whole Grain (rice) | 1.8 |
| Alkalized Cocoa Powder (10-12% fat) | 1.25 |
| Palm Oil | 1.000 |
| High Acyl Gellan | 0.100 |
| Sweetness enhancer | 0.098 |
| Vitamin Premix | 0.062 |
| Minerals (Mg, Fe) | 0.160 |
| Flavours | 0.050 |
| Disodium Phosphate | 0.045 |
| Lecithin | 0.020 |
| Natural Sweetener | 0.007 |

### Example 6

An experimental trial was performed for an embodiment of the hydrolyzed whole grain composition using a blend of whole grain flours (wheat, oat and barley) and an added antioxidant in the hydrolysate.

The hydrolysis was performed in a mashing room equipped with two steam jacketed tanks (12,000gal and 10,000gal capacity each). One tank was used for hydrolysis and the other was used to contain hot water used for water infusion. Burn-on of the flours on the surface of tank was observed if jacket steam was used to heat the flour slurry before gelatinization temperature. The burn-on can be minimized by using hot water infusion to heat the slurry above gelatinization point before switching to jacket steam heating.

50 lbs of water treatment salt (calcium sulfate) can be added to process water to increase calcium which is required for enzymatic activity. A mixture of wheat/oat/barley (70:15:15 by weight) was hydrolyzed with 0.1% of amylase (VALIDASE®) and 0.05% protease (ALCALASE®).

To assure a uniform distribution of the enzyme in the mix, 500L of the water and the enzyme(s) were mixed in the tank initially. After that, all the flours and the rest of the water were mixed in. The flour flowed down to the mixing tank by gravity from a silo on the top. As flour flowed into the tank, water was pumped tangentially into the flour stream. Therefore, the flour and the water are mixed before getting into the mixing tank at a 2.4:1 weight ratio of water (at 50 °C) to flour. The motor on the mixing tank was 15hp and had an output of maximum 25rpm. The mixer was set at 100% (25 rpm).

In order to eliminate clumps, the product was transferred to a second tank through a transfer pump. This successfully minimized the clumps. The slurry was then heated to 85 °C by jacket steam. The heating took about 15 min. The slurry was then held at 85 °C for 15 min. followed by heating to 95 °C and holding for 15 min. to deactivate the enzyme. A minor amount of burned-on was observed on the tank wall where the steam enters the jacket. Thereafter the slurry was cooled to 60 to 63 °C prior to evaporation. The transfer and cooling process took about 25 minutes.

To improve the flow characteristic of raw flour, preferably the different flours are mixed before metering them into the system to minimize the bridging effect by one particular type of flours, such as oat flours.

A Mastersizer particle size analyzer which uses laser diffraction was used to measure particle size of the samples in the slurry. Particle sizes within a sample can vary substantially by several orders of magnitude. D₉₀ represents the particle size at which 90% of the particles sizes are of smaller diameter and 10% are larger diameter. Viscosity was measure using a Rapid Viscosity Analyzer (RVA-super 4 Newport Scientific; Warriewood, Australia; with Julabo F25-ED water bath). The hydrolyzed whole grain blend had solids in an amount of 13 wt%, a viscosity of 65 cP at 10 °C, a viscosity of 65 at 25 °C, and a D₉₀ particle size of 364 microns. The viscosity was slightly higher than expected, due to a longer hydrolysis time.

The wheat/oat/barley slurry was evaporated from 13% solids to a concentration of 26.7% solids. Due to the small quantity of material, the evaporator was run very conservatively way without trying to push to the highest possible concentration. Evaporation was completed in 60 minutes, and evaporated samples were cooled below 10 °C and kept at this temperature until drying. The viscosity after evaporation was 742 cP at 25 °C and 1,227 cP at 10 °C.

For spray drying, a Niro Filtermat spray dryer unit equipped with spray nozzles was used. This type of spray dryer has a belt on the bottom of the spray dryer tower. When the semi-dried material falls on the belt, it forms a thick film which goes through a hot air tunnel for complete drying. The film is separated from the belt by a blade at the end of the hot air tunnel and sent to a grinder. Grinded product was passed through a sieve. The dryer uses a direct fire burner for heating incoming filtered air to contact the product and remove water in spray tower and belt chamber. Water removal rate of this dryer is 4,0001b/hr. For these trials, three, high pressure nozzles (SDX V from Delavan Spray Technologies; Orifice number: W19581-70; Spray angle: 75°) were used to spray the incoming slurry. The position of the nozzles was arranged in such a way that uniform spread on the belt could be obtained.

A rotating Russell separator with a 0.875 mm opening screen was used as the slurry was pumped to the spray dryer to separate large particle (if any) to avoid spray nozzle plugging. The hydrolyzed whole grain concentrate was heated to 60 °C before feeding the spray dryer. The inlet and outlet air temperatures of the dryer chamber were 177 °C and 66 °C, respectively. The relative humidity of the air exiting the chamber was at 20%. The powders collected had a moisture content of about 4.1% with a water activity of 0.16 - 0.19. The target moisture level was between 2.5 - 3.5%. Preferably a self-cleaning filter and a positive displacement feed pump would have been used; the drying process took 4 hours due to a reduced flow rate to the dryer in the absence of these components.

The hydrolyzed wheat/oat/barley powder was reconstituted at 20 °C water to a level of 30% total solids and held at least for 2 hrs. to assure complete water absorption. Thereafter the viscosity at 25 °C and the particle size was measured. The viscosity of the LWG powder after reconstitution was approximately the same as the slurry before drying. The particle size was as follows: largest particle size = 800 µm, D₉₀ = 300 µm, D₅₀ = 73 µm, D₁₀ = 8.2 µm. The viscosity at 25 °C was 878

Based on these factory trial results, the hydrolysis, evaporation and spray drying of a mixture of wheat, oat, and barley is suitable for preparing a hydrolyzed whole grain composition.

It should be understood that various changes and modifications to the presently preferred embodiments described herein will be apparent to those skilled in the art. Such changes and modifications can be made without departing from the scope of the present subject matter and without diminishing its intended advantages. It is therefore intended that such changes and modifications be covered by the appended claims.

## Claims

1. A ready-to-drink beverage comprising:
a dairy component;
a cocoa component in an amount of from 0.25 to 2.5 wt% of the beverage;
sucrose in an amount of from 2 to 7 wt% of the beverage;
a hydrolyzed whole grain composition in an amount of from 2 to 7 wt% of the beverage; and
a stabilizing system comprising high acyl gellan in an amount of from 0.01 to 0.30 wt% of the beverage;
wherein the average particle size D[4,3] of the beverage is comprised between 30 and 45 microns with a span comprised between 8 and 15 microns.

2. The ready to drink beverage according to claim 1, wherein said stabilizing system further comprises iota carrageenan in an amount of from 0.001 to 0.1 wt% of the beverage.

3. The ready to drink beverage according to claim 1 or 2, wherein said cocoa component is alkalised cocoa.

4. The ready to drink beverage according to any one of claims 1 to 3, further comprising a malt component.

5. The ready to drink beverage according to any one of claims 1 to 4, further comprising sodium hexametaphosphate in an amount from 0.005 to 0.2 wt% of the beverage.

6. The ready to drink beverage according to any one of claims 1 to 5, wherein the hydrolyzed whole grain composition comprises wheat, oat, rice, barley, or a blend thereof.

7. The ready to drink beverage according to any one of claims 1 to 6, which contains from 0.80 to 1.2 g of dietary fibers per 100mL of the beverage.

8. A method of producing a ready to drink beverage of claim 1 comprising the steps of:
a) mixing into a liquid: a cocoa component in an amount of from 0.25 to 2.5 wt% of the beverage; sucrose in an amount of from 2 to 7 wt% of the beverage; a hydrolyzed whole grain composition in an amount from 2 to 7 wt% of the beverage; a stabilizing system comprising high acyl gellan in an amount from 0.01 to 0.30 wt% of the beverage; wherein said liquid is milk or water; wherein a dairy component is mixed into said liquid when said liquid is water;
b) sterilizing the mix obtained in step a) for 3 to 15 seconds at a temperature of 140°C to 145°C, thereby obtaining a sterilized mix;
c) performing a two-step homogenization of the sterilized mix at a first pressure of 135 to 250 bars, then at a second pressure of 35 bars to 50 bars, thereby obtaining a homogenized mix;
d) cooling said homogenized mix to a temperature of 4°C to 30°C; and
e) aseptically filling said homogenized mix into a container.

9. The method according to claim 8, wherein said stabilizing system further comprises iota carrageenan in an amount of from 0.001 to 0.1 wt% of the beverage.

10. The method according to claim 8 or 9, wherein said cocoa component is hydrated and heated for 30 to 60 minutes at a temperature of 80°C to 95°C, prior to mixing said cocoa component into said liquid.

11. The method according to any one of claims 8 to 10, wherein the hydrolyzed whole grain composition is added to the other components as a powder or as a liquid concentrate.

12. The method according to any one of claims 8 to 11, comprising forming the hydrolyzed whole grain composition by subjecting a whole grain component to an alpha-amylase and a protease.

13. The method according to any one of claims 8 to 12, comprising adding a malt component to the beverage.

14. The method of claim 13, wherein the malt component comprises malted barley.

## Patentansprüche

1. Trinkfertiges Getränk, das Folgendes umfasst:
einen Milchbestandteil;
einen Kakaobestandteil in einer Menge von 0,25 bis 2,5 Gew. -% des Getränks;
Saccharose in einer Menge von 2 bis 7 Gew. -% des Getränks;
eine hydrolysierte Vollkornzusammensetzung in einer Menge von 2 bis 7 Gew. -% des Getränks; und
ein Stabilisierungssystem, das Gellan mit hohem Acylanteil in einer Menge von 0,01 bis 0,30 Gew. -% des Getränks umfasst;
wobei die mittlere Teilchengröße D[4,3] des Getränks zwischen 30 und 45 Mikrometer mit einer Spanne zwischen 8 und 15 Mikrometern beträgt.

2. Trinkfertiges Getränk nach Anspruch 1, wobei das Stabilisierungssystem ferner lota-Carrageenan in einer Menge von 0,001 bis 0,1 Gew. -% des Getränks umfasst.

3. Trinkfertiges Getränk nach Anspruch 1 oder 2, wobei es sich bei dem Kakaobestandteil um alkalisierten Kakao handelt.

4. Trinkfertiges Getränk nach einem der Ansprüche 1 bis 3, das ferner einen Malzbestandteil umfasst.

5. Trinkfertiges Getränk nach einem der Ansprüche 1 bis 4, das ferner Natriumhexametaphosphat in einer Menge von 0,005 bis 0,2 Gew. -% des Getränks umfasst.

6. Trinkfertiges Getränk nach einem der Ansprüche 1 bis 5, wobei die hydrolysierte Vollkornzusammensetzung Weizen, Hafer, Reis, Gerste oder eine Mischung davon umfasst.

7. Trinkfertiges Getränk nach einem der Ansprüche 1 bis 6, das von 0,80 bis 1,2 g Ballaststoffe pro 100 ml des Getränks enthält.

8. Verfahren zum Herstellen eines trinkfertigen Getränks nach Anspruch 1, das die folgenden Schritte umfasst:
a) Einmischen von Folgendem in eine Flüssigkeit: einen Kakaobestandteil in einer Menge von 0,25 bis 2,5 Gew. -% des Getränks; Saccharose in einer Menge von 2 bis 7 Gew. -% des Getränks; eine hydrolysierte Vollkornzusammensetzung in einer Menge von 2 bis 7 Gew. -% des Getränks; ein Stabilisierungssystem, das Gellan mit hohem Acylanteil umfasst, in einer Menge von 0,01 bis 0,30 Gew. -% des Getränks; wobei es sich bei der Flüssigkeit um Milch oder Wasser handelt; wobei ein Milchbestandteil in die Flüssigkeit gemischt wird, wenn es sich bei der Flüssigkeit um Wasser handelt;
b) Sterilisieren der in Schritt a) erhaltenen Mischung 3 bis 15 Sekunden lang bei einer Temperatur von 140 °C bis 145 °C, wodurch eine sterilisierte Mischung erhalten wird;
c) Durchführen einer zweistufigen Homogenisierung der sterilisierten Mischung bei einem ersten Druck von 135 bis 250 Bar, dann bei einem zweiten Druck von 35 Bar bis 50 Bar, wodurch eine homogenisierte Mischung erhalten wird;
d) Abkühlen der homogenisierten Mischung auf eine Temperatur von 4 °C bis 30 °C; und
e) aseptisches Füllen der homogenisierten Mischung in einen Behälter.

9. Verfahren nach Anspruch 8, wobei das Stabilisierungssystem ferner lota-Carrageenan in einer Menge von 0,001 bis 0,1 Gew. -% des Getränks umfasst.

10. Verfahren nach Anspruch 8 oder 9, wobei der Kakaobestandteil hydratisiert und 30 bis 60 Minuten lang bei einer Temperatur von 80 °C bis 95 °C erhitzt wird, bevor der Kakaobestandteil in die Flüssigkeit gemischt wird.

11. Verfahren nach einem der Ansprüche 8 bis 10, wobei die hydrolysierte Vollkornzusammensetzung als ein Pulver oder als ein flüssiges Konzentrat zu den anderen Bestandteilen zugegeben wird.

12. Verfahren nach einem der Ansprüche 8 bis 11, das das Bilden der hydrolysierten Vollkornzusammensetzung umfasst, indem ein Vollkornbestandteil einer alpha-Amylase und einer Protease ausgesetzt wird.

13. Verfahren nach einem der Ansprüche 8 bis 12, das ferner das Zugeben eines Malzbestandteils zu dem Getränk umfasst.

14. Verfahren nach Anspruch 13, wobei der Malzbestandteil Malzgerste umfasst.

## Revendications

1. Boisson prête à boire comprenant :
un composant laitier ;
un composant de cacao en une quantité de 0,25 à 2,5 % en poids de la boisson ;
du saccharose en une quantité de 2 à 7 % en poids de la boisson ;
une composition de céréale complète hydrolysée en une quantité de 2 à 7 % en poids de la boisson ; et
un système stabilisant comprenant de la gomme gellane à forte teneur en acyle en une quantité de 0,01 à 0,30 % de la boisson ;
dans laquelle la taille moyenne de particules D[4,3] de la boisson est comprise entre 30 et 45 micromètres avec un intervalle compris entre 8 et 15 micromètres.

2. Boisson prête à boire selon la revendication 1, dans laquelle ledit système stabilisant comprend en outre de l'iota carraghénane en une quantité de 0,001 à 0,1 % en poids de la boisson.

3. Boisson prête à boire selon la revendication 1 ou 2, dans laquelle ledit composant de cacao est du cacao alcalinisé.

4. Boisson prête à boire selon l'une quelconque des revendications 1 à 3, comprenant en outre un composant de malt.

5. Boisson prête à boire selon l'une quelconque des revendications 1 à 4, comprenant en outre de l'hexamétaphosphate de sodium en une quantité de 0,005 à 0,2 % en poids de la boisson.

6. Boisson prête à boire selon l'une quelconque des revendications 1 à 5, dans laquelle la composition de céréale complète hydrolysée comprend du blé, de l'avoine, du riz, de l'orge ou un mélange de ceux-ci.

7. Boisson prête à boire selon l'une quelconque des revendications 1 à 6, qui contient de 0,80 à 1,2 g de fibres alimentaires pour 100 mL de la boisson.

8. Procédé de production d'une boisson prête à boire selon la revendication 1, comprenant les étapes consistant à :
a) mélanger dans un liquide : un composant de cacao en une quantité de 0,25 à 2,5 % en poids de la boisson ; du saccharose en une quantité de 2 à 7 % en poids de la boisson ; une composition de céréale complète hydrolysée en une quantité de 2 à 7 % en poids de la boisson ; un système stabilisant comprenant de la gomme gellane à forte teneur en acyle en une quantité de 0,01 à 0,30 % en poids de la boisson ; dans lequel ledit liquide est du lait ou de l'eau ; dans lequel un composant laitier est mélangé dans ledit liquide lorsque ledit liquide est de l'eau ;
b) stériliser le mélange obtenu à l'étape a) pendant 3 à 15 secondes à une température de 140 °C à 145 °C, ce qui permet d'obtenir un mélange stérilisé ;
c) réaliser une homogénéisation à deux étapes du mélange stérilisé à une première pression de 135 à 250 bars, puis à une seconde pression de 35 bars à 50 bars, ce qui permet d'obtenir un mélange homogénéisé ;
d) refroidir ledit mélange homogénéisé à une température de 4 °C à 30 °C ; et
e) remplir de manière aseptique ledit mélange homogénéisé dans un récipient.

9. Procédé selon la revendication 8, dans lequel ledit système stabilisant comprend en outre de l'iota carraghénane en une quantité de 0,001 à 0,1 % en poids de la boisson.

10. Procédé selon la revendication 8 ou 9, dans lequel ledit composant de cacao est hydraté et chauffé pendant 30 à 60 minutes à une température de 80 °C à 95 °C, avant de mélanger ledit composant de cacao dans ledit liquide.

11. Procédé selon l'une quelconque des revendications 8 à 10, dans lequel la composition de céréale complète hydrolysée est ajoutée aux autres composants sous la forme d'une poudre ou sous la forme d'un concentré liquide.

12. Procédé selon l'une quelconque des revendications 8 à 11, comprenant la formation de la composition de céréale complète hydrolysée en soumettant un composant de céréale complète à une alpha amylase et à une protéase.

13. Procédé selon l'une quelconque des revendications 8 à 12, comprenant l'ajout d'un composant de malt à la boisson.

14. Procédé selon la revendication 13, dans lequel le composant de malt comprend de l'orge maltée.
